(19) **Europäisches Patentamt / European Patent Office / Office européen des brevets**

(11) **EP 4 578 296 A1**

(12) # EUROPEAN PATENT APPLICATION

(43) Date of publication:
**02.07.2025 Bulletin 2025/27**

(21) Application number: **24218351.5**

(22) Date of filing: **09.12.2024**

(51) International Patent Classification (IPC):
**A23L 7/20** (2016.01)  **C12C 1/02** (2006.01)
**C12C 1/027** (2006.01)

(52) Cooperative Patent Classification (CPC):
**A23L 7/20; C12C 1/02; C12C 1/027**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.12.2023  CN 202311842732
28.12.2023  CN 202311842744**

(71) Applicant: **L'AIR LIQUIDE, SOCIETE ANONYME
POUR L'ETUDE ET
L'EXPLOITATION DES PROCEDES GEORGES
CLAUDE
75007 Paris (FR)**

(72) Inventors:
• **SHI, Chunqiong
SHANGHAI, 201108 (CN)**

• **LU, Jian
WUXI CITY, 214122 (CN)**
• **ZHU, Hao
WUXI CITY, 214122 (CN)**
• **PENG, Huoxiang
SHANGHAI, 201108 (CN)**
• **PATIER, Didier
SHANGHAI, 201108 (CN)**
• **CHENG, Xu
SHANGHAI, 201108 (CN)**
• **WU, Dianhui
WUXI CITY, 214122 (CN)**
• **CAI, Guolin
WUXI CITY, 214122 (CN)**

(74) Representative: **Air Liquide
L'Air Liquide S.A.
Direction de la Propriété Intellectuelle
75, Quai d'Orsay
75321 Paris Cedex 07 (FR)**

(54) ## MALT PRODUCTION METHOD AND METHOD FOR IMPROVING ANTIOXIDANT ACTIVITY OF MALT

(57)    The present application discloses a malt production method and a method for improving the antioxidant activity of malt, wherein grains are subjected to at least one steeping step, in which the grains are immersed in hydrogen water with a dissolved hydrogen concentration of 0.3 to 1.6 ppm. By using hydrogen rich water in malt production, it is possible to take into account simultaneous improvements to multiple quality indicators at the same time. The positive biological effects of hydrogen rich water are especially significant. The increased content of $\alpha$-amino nitrogen in the malt brings greater economic benefit to malt producers. Moreover, the colour intensity and turbidity of the malt are significantly reduced, effectively solving the problem of wort often being turbid. The endogenous antioxidant activity of malt, wort and even fermented beverages is increased, as desired by malt producers and the brewing industry. No additional additives are introduced during malt production.

**EP 4 578 296 A1**

**Description**

<u>Technical Field</u>

The present application relates to a malt production method and a method for improving the antioxidant activity of malt. More specifically, it relates to a method of using hydrogen rich water in malt production, and a malt and a fermented beverage/foodstuff obtained by the method. It also specifically relates to the use of hydrogen rich water in malt production to improve the antioxidant activity of malt.

<u>Background Art</u>

Cereal grains may be used in beverages and foodstuffs, either in their original form or as germinated cereals. Due to its high enzyme content, malt is more suitable as a fermentation substrate, and as malt flavouring and nourishment added to foodstuffs and beverages.

About 96% of all the malt in the world is used for producing alcohol, about 3% is used for the distillation industry, and the remainder is used for the foodstuff industry, e.g. malt beverages. Malt suitable for alcohol production contains amylase and protease with a certain level of activity. Germination of barley causes starch and protein to achieve a moderate degree of dissolution under the action of enzymes, forming a precursor substance for brewing. Malt production (the malt process) has already become an independent industry. Malt producers buy cereal, such as barley, sorghum, wheat and rye, and process it in a variety of steps to form different types of malt suitable for brewing.

Taking barley as an example, it undergoes steps such as pre-treatment, steeping, germination, roasting/drying of green malt and root removal to obtain malt. Mashing of the malt produces wort. The wort is the main source of the sugars needed for yeast metabolism when brewing alcohol. The final products, alcohol and carbon dioxide, further impart a distinctive foam and refreshing taste to the beer, which also has a malt flavour. Amylase and protease in the malt act in synergy to convert non-fermenting polysaccharides to fermentable sugars; at the same time, corresponding changes take place in the $\alpha$-amino nitrogen content, the content of foaming proteins, and the distribution of proteins.

Malt provides the beer with major chemical components as well as good characteristic components of beer. Malt suitable for beer production contains amylase and protease. Germination of barley causes starch and protein in the grains to achieve a moderate dissolution under the action of enzymes, forming a precursor substance for beer. The malt production process uses barley as a raw material, which undergoes steps such as pre-treatment, steeping, germination, roasting/drying of green malt, and root removal. Mashing of malt is an important intermediate process in subsequent brewing of beer. During enzymolysis of starch and protein, amylase and protease in the malt act in synergy to convert non-fermenting polysaccharides to fermentable sugars, and corresponding changes take place in the $\alpha$-amino nitrogen content, the content of foaming proteins, and the distribution of proteins. In the course of fermentation, yeast utilizes fermentable sugars and amino nitrogen, converting them by fermentation to alcohol and flavour components of beer.

Malting process has already become an independent industry. Malt producers buy cereal, such as barley, sorghum, wheat and rye, and process it in a variety of steps to form different types of malt suitable for brewing. Taking barley as an example, barley germinates to become malt, and mashing of the malt produces wort. The wort is the main source of the sugars needed for yeast metabolism when brewing alcohol. The final products, alcohol and carbon dioxide, further impart a distinctive foam and refreshing taste to the beer, which also has a malt flavour. 96% of all the malt in the world is used for producing alcohol, about 3% is used for the distillation industry, and the remainder is used for the foodstuff industry, e.g. malt beverages.

Especially important steps in traditional malt production include steeping, germination and kilning. The steeping process involves soaking grains in water for several hours, followed by air rest for a period to remove water. The air rest is considered necessary, because the immersed grains might become deficient in oxygen. The steeping and air rest may be repeated multiple times. The grains are then transferred to a germinating apparatus. The aim of germination is to continue the production of enzymes inside the grains.

These enzymes are able to degrade the rigid structure of the cereal, so that it can be easily used in foodstuff and beverage processing. Small rootlets will form during germination. Based on the variety of barley and the type of malt to be produced, the water content can be regulated by adjusting the steeping process.

The composition and quality of the malt have a direct impact on the flavour and quality of the fermented beverage. Key quality indicators of malt include $\alpha$-amino nitrogen, colour and turbidity. Apart from the effect of the variety and quality (e.g. protein content, grain size, etc.) of the barley itself, malt production is a key link affecting malt quality indicators. Moreover, beer producers are becoming ever more aware of the fact that the ageing of flavour in beer is caused by a series of oxidation/reduction reactions of oxygen free radicals, etc. However, no matter how much the total oxygen content of beer packaging is improved, it is inevitable that oxidation might occur in each step, from raw materials to packaging. Thus, at present, more and more attention is being paid to increasing the antioxidant activity of malt.

Steeping and germination facilities are now quite well developed, and barley raw material is of stable quality.

Improvements to one or more quality indicators are often the focus of attention and the aim is to produce malt of high quality. However, when one quality indicator is improved, it is often not possible to take into account the effects on other quality indicators at the same time. For example, it has been reported in the prior art that the amount of material extracted by steeping of the malt is increased by 0.6%, and the amount of $\alpha$-amino nitrogen by 27 mg/100 g, by adding riboflavin (RONG Zhiming, Study on the use of exogenous substances to improve malt quality [D]. Dalian Polytechnic University, 2016). However, the addition of riboflavin also causes the colour of the malt to increase by about 1.5 EBC. This is a negative effect on wort and beer quality which malt producers really do not want. It has also been reported that the amount of material extracted by steeping of the malt is increased by 1.1%, and the amount of $\alpha$-amino nitrogen by 22 mg/100 g, by adding mannitol. However, the addition of mannitol also causes the colour intensity of the malt to increase by about 0.4 EBC. This is also undesirable.

Barley and malt are rich in phenols, which have antioxidant activity, and thus have a significant influence on the colour, aroma, taste and stability of beer. As endogenous antioxidants, these phenols can act as free radical scavengers, reducing agents and metal ion chelating agents, helping to control oxidation reactions. It has been found that the polyphenol content exhibits a rising trend during barley germination. This shows that the malt production process is highly significant with regard to increasing antioxidant activity and phenolic compounds.

It has been reported that exogenous antioxidant substances are added to enhance the antioxidant efficacy of beer. These exogenous antioxidant substances include xylooligosaccharides, SOD, taurine and tea polyphenols, etc. However, as well as being expensive, they affect the traditional flavour of beer to a certain extent, so are not suitable for large-scale use. A method for increasing the content of phenols in malt by adding metal ions to the steeping water has also been disclosed in the prior art.

Taking as an example the Chinese invention patent with publication No. CN 10289921 0B, $MgCl_2$ is added to a final concentration of 60 ppm in the form of impregnation in the steeping stage. $CaCl_2$ is added and controlled to a final concentration of 40 ppm in the initial stage of mashing. Then barley germination, roasting and mashing are carried out, and the wort produced is used as the main starting material to brew beer. Ultimately, the total polyphenol content of the finished beer is increased by 35% compared to beer brewed without metal ion treatment.

Another paper (Elizabeth L. Inns, Lesley A. Buggey, Christopher Booer, et al. Effect of Modification of the Kilning Regimen on Levels of Free Ferulic Acid and Antioxidant Activity in Malt[J]. American Chemical Society (acs), 2011, 59(17): 9335-9343.) has reported improving the antioxidant activity of malt by improving roasting. The use of new roasting processes (Manipulated Kilning Regimens, MKRs) is achieved by controlling the percent recirculation, fan speed and air-on temperature, enabling the kiln bed to achieve a stable break point at set temperatures of 45°C, 55°C and 65°C.These processes are designated MKR(45), MKR(55) and MKR(65). The grain bed remains under these conditions for 2 hours (14.5 to 16.5 hours drying time). For the same roasting time, the ABTS free radical scavenging activity of malt can be increased by about 20% when the MKR(65) roasting process is used, compared with ordinary roasting.

Hydrogen is a gaseous signalling molecule that is biologically safe. Chinese invention patent with publication No. CN102657221B has disclosed a hydrogen rich liquid plant growth regulator, in which the saturation of hydrogen is from 0.1 to 100%, and the solvent is Hoagland nutrient solution, Kimura B nutrient solution, TAP nutrient solution or MS culture liquid. Such a regulator gradually releases hydrogen, promoting plant growth/development and formation, and increasing the productivity. Another paper (The Tale of a Neglected Energy Source: Elevated Hydrogen Exposure Affects both Microbial Diversity and Function in Soil, Mondher Khdhiri e.t, Applied and Environmental Microbiology, June 2017 Volume 83.) has disclosed that the enrichment of hydrogen-oxidizing bacteria by hydrogen produced in nitrogen fixation has been demonstrated to have a fertilizing effect on various crops. When hydrogen is supplied to soil, the ecological niche partitioning of bacteria and fungi is altered, affecting the diversity of microbial function in several ways.

Summary of the Invention

One objective of the present application is to improve the endogenous antioxidant activity of malt, wort and even fermented beverages, as desired by malt producers and the brewing industry. No additional additives are introduced during malt production. The biological effects of hydrogen, a suitable range of concentrations thereof, and the different effects thereof on the stages of malt production, are further explored.

Another objective of the present application is to improve the quality of malt as desired by malt producers and the brewing industry, while also taking into account improvements to colour intensity, turbidity and $\alpha$-amino nitrogen content. Improvement of one quality indicator will not adversely affect other quality indicators. The biological effects of hydrogen are further exploited safely and reliably. Moreover, no additional additives are introduced during malt production.

To achieve the abovementioned objectives of the invention, a first aspect of the present application discloses a malt production method, wherein grains subject to at least one steeping step, in which the grains are immersed in hydrogen water with a dissolved hydrogen concentration of 0.3ppm to 1.6 ppm.

Further, in the at least one steeping step, the grains are immersed in hydrogen water with a dissolved hydrogen concentration of 0.3 ppm to 1.2 ppm, preferably 0.6 ppm to 1.2 ppm.

Further, after the steeping step, the grains begin to germinate, and hydrogen water with a dissolved hydrogen concentration of 0.3 ppm to 1.6 ppm is used at least once to keep a surface of the grains moist.

Further, after the steeping step, the grains begin to germinate, and hydrogen water with a dissolved hydrogen concentration of 0.3 ppm to 1.2 ppm, preferably 0.6 ppm to 1.2 ppm, is used at least once to keep a surface of the grains moist.

Further, the at least one steeping has a temperature range of 10°C to 20°C, preferably 14°C to 18°C.

Further, the steeping is performed twice, and the grains are immersed in hydrogen water with a dissolved hydrogen concentration of 0.3 ppm to 1.6 ppm in both the first steeping and the second steeping.

Further, the at least one steeping continues for a period of more than 3 hours, preferably more than 4 hours, and more preferably more than 5 hours.

Further, germination has a temperature range of 12 to 25°C, preferably 14 to 20°C, more preferably 14 to 18°C, and most preferably 16 to 18°C.

Further, hydrogen water is used at least once at intervals of 20 to 25 hours after germination begins.

A second aspect of the present application provides a use of the malt production method according to the first aspect for reducing malt colour intensity.

A third aspect of the present application provides a use of the malt production method according to the first aspect for reducing malt turbidity.

A fourth aspect of the present application provides a use of the malt production method according to the first aspect for increasing the $\alpha$-amino nitrogen content of malt.

A fifth aspect of the present application provides a malt obtained by the malt production method according to the first aspect.

A sixth aspect of the present application provides a use of the malt according to the fifth aspect for preparing a fermented beverage or fermented foodstuff.

Further, the fermented beverage comprises beer, a beer-flavoured beverage or whisky.

A seventh aspect of the present application provides a method for improving the antioxidant activity of malt, wherein grains are subjected to at least one steeping step, in which the grains are immersed in hydrogen water with a dissolved hydrogen concentration of 0.3 to 1.6 ppm.

Further, in the at least one steeping step, the grains are immersed in hydrogen water with a dissolved hydrogen concentration of 0.3 to 1.2 ppm.

Further, in the at least one steeping step, the grains are immersed in hydrogen water with a dissolved hydrogen concentration of 0.6 to 1.2 ppm.

Further, after the steeping step, the grains begin to germinate, and hydrogen water with a dissolved hydrogen concentration of 0.3 to 1.6 ppm, preferably 0.3 to 1.2 ppm, and more preferably 0.6 to 1.2 ppm, is used at least once to keep a surface of the grains moist.

Further, the at least one steeping has a temperature range of 10°C to 20°C, preferably 14°C to 18°C.

Further, the steeping is performed twice, and the grains are immersed in hydrogen water in both the first steeping and the second steeping.

Further, the at least one steeping continues for a period of more than 3 hours, preferably more than 4 hours, and more preferably more than 5 hours.

Further, germination has a temperature range of 12 to 25°C, preferably 14 to 20°C, more preferably 14 to 18°C, and most preferably 16 to 18°C.

Further, hydrogen water is used at least once at intervals of 20 to 25 hours after germination begins.

Further, an antioxidant activity indicator of the malt comprises DPPH free radical scavenging activity.

Further, an antioxidant activity indicator of the malt comprises ABTS free radical scavenging activity.

Further, an antioxidant activity indicator of the malt comprises reducing power.

Further, an antioxidant activity indicator of the malt comprises metal ion chelating ability.

Further, an antioxidant activity indicator of the malt comprises total polyphenol content.

Further, an antioxidant activity indicator of the malt comprises superoxide dismutase activity.

Further, an antioxidant activity indicator of the malt comprises catalase activity.

An eighth aspect of the present application provides a method for improving the antioxidant activity of plant raw material, the method comprising a step of subjecting the plant raw material to steeping at least once and/or germination at least once in hydrogen water with a dissolved hydrogen concentration of 0.3 to 1.6 ppm, to produce a fermented foodstuff or fermented beverage.

Further, the plant raw material comprises but is not limited to leaves, seeds, roots, stalks, flowers or fruits.

Compared with the prior art, the technical solution provided in the present application has the following advantages:

1. By using hydrogen rich water in malt production, the present application is able to take into account simultaneous improvements to multiple quality indicators at the same time. The positive biological effects of hydrogen rich water are especially significant. The increased content of $\alpha$-amino nitrogen in the malt brings greater economic benefit to malt producers. Moreover, the colour intensity and turbidity of the malt are significantly reduced, effectively solving the problem of wort becoming turbid.

2. The present application also provides the stage of using hydrogen rich water and a suitable range of hydrogen rich water concentrations, constituting important guidance for malt producers.

3. Compared with the prior art, the process of introducing hydrogen rich water into malt production does not involve the introduction of exogenous compounds or exogenous enzyme preparations, so it has a high level of biological safety.

4. Various antioxidant activity indices of the malt effectively improved by using hydrogen rich water (dissolved hydrogen concentration 0.3 to 1.6 ppm) once at least in the steeping stage during malt production. The positive biological effects of hydrogen rich water are especially significant.

5. The present application is able to take into account simultaneous improvements to multiple quality indicators at the same time, and does not involve the introduction of exogenous antioxidants or other compounds.

Detailed Description of the Invention

Specific embodiments of the present application are described in detail below. However, it should be understood that the present application is not limited to the implementations described below, and the technical concept of the present application may be implemented in combination with other well-known techniques or other technologies having the same functions as those well-known techniques.

In the description of the specific embodiments below, in order to clearly show the structure and manner of operation of the present application, many directional terms will be used for description, but terms such as "front", "rear", "left", "right", "outer", "inner", "outward", "inward", "axial", "radial", etc. should be understood to be terms of convenience rather than restrictive terms.

In addition, the terms "first" and "second" are only used for descriptive purposes rather than limiting chronological order, quantity, or importance, should not be construed as indicating or implying relative importance or implicitly specifying the number of technical features indicated, and are only intended to differentiate one technical feature from another technical feature in the present technical solution.

Thus, features defined with "first" and "second" may explicitly or implicitly include one or more of the features. In the description of the present application, "multiple" means two or more, unless otherwise expressly and specifically specified. Similarly, qualifiers similar to "a" appearing herein do not indicate a limitation of quantity, but describe a technical feature that has not appeared in the preceding text.

Similarly, unless modified by a specific quantity measure word, nouns herein should be regarded as including both singular and plural forms, i.e. the technical solution may include a single one of the technical feature concerned, but may also include a plurality of the technical feature. Similarly, modifiers similar to "approximately" and "about" appearing before numerals herein usually include the numeral, and the specific meaning thereof should be understood with reference to the context.

It should be understood that in the present application, "at least one (item)" means one or more, and "multiple" means two or more. The expression "and/or" is used to describe the associative relationship between associated objects, and indicates that three relationships may exist. For example, "A and/or B" may mean three situations: A alone is present, B alone is present, and A and B are both present, wherein A and B may be singular or plural. The symbol "/" generally indicates an "or" relationship between the associated objects before and after it. "At least one of the following items (pieces)" or a similar expression means any combination of these items, including a single item (piece) or any combination of multiple items (pieces). For example, at least one (item) of a, b or c can mean: a, b, c, "a and b", "a and c", "b and c", or "a and b and c", wherein a, b and c may be single or multiple.

Unless clearly indicated otherwise, each aspect or embodiment defined herein may be combined with any other aspect(s) or embodiment(s). In particular, any preferred or advantageous feature indicated can be combined with any other preferred or advantageous feature indicated.

**Explanation of terms**

As used herein, "hydrogen rich water" (HRW) or "hydrogen water" means water with a certain amount of hydrogen mixed into it. In an environment of atmospheric pressure and 20°C, the maximum concentration of hydrogen dissolved in water is 1.6 ppm (i.e. the saturation concentration), i.e. at most 1.6 mg of hydrogen is dissolved in each kg of water. As used herein, the source of hydrogen may be hydrogen produced by electrolysis, or cylinder gas, which are well known to those skilled in the art.

As used herein, there is no restriction on the way in which hydrogen passes into a steeping container, as long as it is ensured that the hydrogen is diffused in water. For example, a gas inlet may be a nozzle or a jet, etc. Another option is to dissolve hydrogen in water first, and then inject the hydrogen water into the steeping container.

As used herein, "hydrogen rich water concentration" means the dissolved hydrogen concentration in the hydrogen rich water initially entering the steeping container. Despite taking into account the dissipation of hydrogen and different ways of passing in hydrogen, those skilled in the art will know that the continuous addition of hydrogen or hydrogen water, or another method, may be used to maintain the required dissolved hydrogen concentration, e.g. reaching a hydrogen rich water concentration of more than 80%, preferably a hydrogen rich water concentration of more than 85%, more preferably a hydrogen rich water concentration of more than 90%, and most preferably a hydrogen rich water concentration of 95% - 99.9%. It should be noted that, in view of the dissipation characteristics of hydrogen and limitations of measuring means, the hydrogen rich water concentrations stated herein (e.g. 0.3ppm, 0.4ppm, 0.5ppm, 0.6ppm, 0.7ppm, 0.8ppm, 0.9ppm, 1.0ppm, 1.1ppm, 1.2ppm, 1.3ppm, 1.4ppm, 1.5ppm, 1.6ppm, etc.) are allowed to have a certain range of numerical fluctuations. Those skilled in the art can tell that a reasonable range that fluctuates near a certain numerical point of hydrogen rich water concentration can be considered to perform the same level of biological effect.

As used herein, "water" in a steeping process may be any aqueous solution or various sources, including piped water, pure water, purified water and recycled water, but is not limited to these. Even a mixture of water and cereal grains may also be regarded as a suspension or aqueous solution.

The grains may come from any well-known cereal, such as barley, rice, sorghum, maize, millet, triticale, rye, oats and wheat. In a preferred embodiment of the present application, the cereal grains are barley grains. The grains may be of any variety of barley. The cereal grains may have a relatively low water content before germination.

For example, the cereal grains may have a water content of at most 30%, preferably at most 20%, for example at most 15%, for example 5 to 15%. Some cereal grains include a husk, while other cereal grains have no husk. Before the germination step, cereal grains with husks may be processed to remove at least a portion of the husk. Generally, if cereal grains with no husk are used, there is no need for husk removal processing. Cereals with no husk include, for example, barley and wheat without husks. In a preferred embodiment of the present application, the cereal grains for use in the method of the present application are barley grains.

As used herein, the term "auxiliary material" means a carbon-rich starting material added during beer brewing. The auxiliary material may be cereal grains that have not germinated, and may be ground together with germinated grains prepared in accordance with the present application. The auxiliary material could also be syrup, sugar, etc.

As used herein, the terms "moisture content" and "water content" of grains means the percentage of $H_2O$ w/w in the grains. For the water content of barley, the following method may be performed: firstly, weigh the weight $W_0$ of an empty weighing bottle, then weigh 5 g of barley, crush them using an EBC standard malt mill, put them into the weighing bottle to obtain a total weight $W_1$, put them into an oven, remove the lid, bake at 105°C for 2 hours, then weigh the weight as $W_2$.

The formula for calculating the water content is: water content

$$(\%) = (W_1 - W_2)/(W_1 - W_0) \times 100\%.$$

As used herein, the term "germinated grains" means grains that have already developed visible sprouts (preferably at least 1 mm, e.g. at least 2 mm sprouts) and visible stalks.

The malt production process is well known in the art. Cereals may undergo germination to change their kernel structure, composition and enzyme content. The malt so obtained has important uses in foodstuffs for animals and humans. Germinated barley is widely used in the brewing and distilling industries.

As used herein, the terms "soaking", "steeping" and "immersing" mean the process of increasing the water content (about 40 - 45% (w/w)) of cereal kernels.

Steeping may be performed by any conventional method known to those skilled in the art. The purpose of steeping is to increase the water content of the grains, and thus begin germination. Steeping generally comprises one or more step of immersing cereal grains in damp conditions, e.g. by immersing cereal grains in water. This process alternates between immersion or spraying, and ventilation. To increase the moisture content and prepare the malt making for the next step, the moisture content of barley increase from about 11-13% to about 40%-45%. This stage generally lasts for 10-45 hours. There are no specific restrictions on the steeping conditions and well-known conditions may be used. Specifically, soaking and air rest (also called water cut-off) may be performed alternately. For example, it is also possible to repeatedly perform first steeping, first air rest, second steeping, second air rest, third steeping and third air rest, etc.

By repeatedly performing steeping and air rest, it can be ensured that the barley contains sufficient moisture. When the steeping process ends, rootlets will appear, this converts the barley into green malt with uniform water content. The green malt is then transferred into a germination vessel.

The steeping duration varies with barley type, barley quantity and water temperature, so it cannot be set universally. From the perspective of water absorption, the duration of the first steeping is preferably more than 3 hours, more preferably more than 4 hours, more preferably more than 5 hours, further preferably more than 6 hours, and further preferably more than 8 hours. Furthermore, from the perspective of production efficiency, it is preferably less than 20 hours, preferably less than 15 hours, and more preferably less than 10 hours. The steeping temperature is preferably 10 to 20°C, and more preferably 14 to 18°C.

From the perspective of the water diffusion into barley, the air rest time after the first steeping is preferably more than 1 hour, more preferably more than 2 hours, further preferably more than 10 hours, further preferably more than 12 hours, and further preferably more than 15 hours. From the perspective of production efficiency, it is preferably less than 24 hours, and more preferably less than 20 hours. In the air rest stage, the water is discharged such that the grains are re-ventilated. The grains are exposed to air. It should be noted that the grains should not be immersed in water this moment.

The duration of the second steeping may be set appropriately with reference to the amount of moisture already absorbed by the barley, e.g. about 1 to 10 hours, preferably 1 to 6 hours, more preferably 1 to 5 hours, and more preferably 1 to 4 hours. Furthermore, the temperature of the second steeping is not specifically defined, and can be the same temperature as for the first steeping, within the exemplary temperature ranges above. The second air rest can be performed with reference to the first air rest, and the temperature and duration thereof can be set appropriately.

In a preferred embodiment, in the steeping step, the steeping treatment performs a multi-stage method of two immersion and two air rest, or a multi-stage method of three immersion and three air rest, so as to controlling the final moisture content of the grains to reach 39 -45% (i.e. steeping extent). An appropriate moisture content can be provided for the inside of the grains by the steeping method above, such that enzymes originally present in the barley reinvigorate and begin the vital process of germination. Formula for calculating the steeping extent: steeping extent (%) = (mass of grains after steeping-original mass of barley + original moisture content of barley)/mass of grains after steeping.

As used herein, the term "beginning of germination" refers to the time point when the grain is transferred to the germination apparatus after the steeping stage ends, i.e. germination begins. The duration of germination counts from the time when germination begins; for example, the duration of germination counts from the beginning of germination until fine division of the germinated cereal grains begins. In some embodiments, after germination, the cereal grains have a water content of at least 30%, preferably at least 35%, and more preferably at least 40% (e.g. 40% to 45%).

Germination of cereal grains can take place at any feasible temperature. However, the cereal grains may preferably germinate at a temperature of at least 10°C. In particular, the cereal grains may germinate at a temperature within a range of 10 to 25°C, preferably 12 to 25°C, preferably 14 to 20°C, preferably 14 to 18°C, and preferably 16 to 18°C. The cereal grains may preferably not germinate before the germination step. It is worth explaining that the malt germination rate, and whether or not the root system is robust after germination is not a current pain point for malt producers. This is not the same as the intent to improve the sprouting ability of seeds for sowing use in agriculture.

During germination, the barley spreads out on a screen, and continuously ventilated. The germ develops, and a chemical change takes place inside the barley.

This process lasts for 3.5 to 6 days.

Finally, the germ grows to nearly the length of the barley, and the root withers. At this stage, the malt is called green malt. In the germination stage, it is necessary to replenish water to keep the surface of the barley moist. This is called germination water replenishment (water spray). Germination water replenishment performs in a manner well known to those skilled in the art. For example, the surface keeps moist by spraying.

Kiln drying or roasting is the step of drying the malt. The green malt is heated in a drying furnace to reduce the water content and stop further growth. Most commercially available drying furnaces have a minimally flattened green malt bed layer for effective drying, and a flipping machine is used to mix, flip or level the green malt bed layer. Drying may be performed at a conventional temperature, e.g. at least 40°C, at least 45°C, at least 65°C, at least 75°C, e.g. 80 to 90°C, e.g. 80 to 85°C. Kiln drying generally performs at an elevated temperature. A real example of the kiln drying process is as follows: 16 hours at 45 to 65°C; 2 hours at 75 to 80°C; 3 hours at 83°C. The kiln drying step reduces the water content of damp malt from about 40% to 4% ~ 5%.

As used herein, root removal means using a vibrating sieve to remove root buds from the germination process. The last stage of malt production is to produce a golden-yellow malt that is dry and brittle.

Those skilled in the art will know that quality indicators of high-quality malt include $\alpha$-amino nitrogen content, colour intensity and turbidity. The $\alpha$-amino nitrogen content is determined by ninhydrin colourimetry (see beer malt standard QB/T1686-2008). Turbidity is determined using a beer turbid meter. Colour intensity is determined using a UV-VIS spectrophotometer.

The EBC colour scale was formulated by the Institute of Brewing and the European Brewing Convention. It is a generally acknowledged method for colour grading of beers, wort, caramel solutions and similar coloured liquids. Its visible units are between 2 and 27. Pale yellow wort and light beers are at the bottom end of the colour scale, while dark yellow wort, beers and caramels are at the top end of the colour scale.

The conventional mashing test is a standard method for malt quality evaluation, which is recommended by the European Brewing Convention (EBC). Small amount of wort is prepared by this method, and the quality of the malt used is thereby evaluated.

The $\alpha$-amino nitrogen in the malt is low-molecular-weight nitrogen in one type of amino acids, and the chief nitrogen source needed for beer yeast metabolism. The higher the content of $\alpha$-amino nitrogen, the stronger the fermenting ability of the yeast, and the faster the beer fermentation.

Generally, malt with low colour intensity is suitable for brewing pale-coloured beer. The level of colour intensity relates to both the variety of the barley and the malt production process. Process parameters generally positively correlate to colour intensity, such as the steeping extent, the water content during germination, the rate of temperature increase during germination, and the drying and roasting temperatures and times. The colour intensity of pale-coloured malt is required to be EBC 2.5 ~ 5.7. As light-coloured beers have become popular, beer producers have attached more importance to malt colour intensity. Some beer producers even demand that the malt colour intensity be as low as possible.

Turbidity is an indicator for quantifying the clarity and transparency of wort according to the content of turbid substances. The lower the turbidity, the higher the quality of the malt. Malt of high turbidity produces saccharified wort of high turbidity. Substances that cause turbidity in wort mainly include proteins, polyphenols, dextrin, β-glucan and arabinoxylan, etc. Besides these, certain microbial metabolites and other factors might also cause turbidity in the wort. Turbid wort not only affects filtration, but also leads to poor biostability and flavor stability of the fermented beer, which reduces the quality of the beer. For this reason, malt with low turbidity is favored by beer producers.

Those skilled in the art will know that wort can be obtained by the following method: auxiliary ingredients are added to the malt obtained; enzymes such as β-glucanase are added as needed to carry out gelatinization and mashing; filtration is used to remove husks, etc.; hops are added and boiled; and a clarifier is used to remove solid components such as coagulated proteins. In addition, besides the malt obtained by the method of the present application, commonly known malt may also be used in combination, and the proportions may be suitably adjusted.

As defined herein, foodstuffs may include substances that can be processed into nutrients (these may be cold or hot) generally for eating. As defined herein, beverages may include substances that can be processed into substances suitable for drinking, and these may be cold or hot. It is understood that there is a certain somewhat overlap between these two definitions.

Herein, "fermented foodstuff" means a food that is fermented by yeast, etc. The malt obtained in accordance with the present application may be fermented by adding yeast to wort obtained from ingredients including the malt. A filter, etc. is used as needed to remove yeast for production. In this way, a fermented beverage can be prepared. The present application also provides a method for producing a fermented beverage, characterized by the use of malt obtained by the production method of the present application. Herein, "fermented beverage" means a beverage fermented by yeast, etc., e.g. beer, a beer-flavoured drink or whisky, etc. These beverages need only use malt obtained in accordance with the present application as ingredients, which are not specifically defined. These beverages are produced by a commonly known method.

A fresh beer mouthfeel will more easily win the favor of consumers. A fresh beer mouthfeel relates to the endogenous antioxidant activity of the malt and antioxidation steps taken throughout production. The most important endogenous antioxidant components in beer are phenolic substances. These phenolic substances are able to effectively scavenge various free radicals, and inhibit the degree and speed of aging of the beer to a certain extent. Malt accounts for 70% - 80% of the sources of phenols in beer. Malt with a high content of phenols has major significance for increasing the freshness of beer.

Depending on the antioxidation mechanism, the antioxidation systems in barley and malt may be divided into enzymatic antioxidation systems and non-enzymatic antioxidation systems. Non-enzymatic antioxidation systems mainly rely on the aromatic ring with one or more hydroxyl group in phenols, which react with free radicals to scavenge the free radicals.

Enzymatic antioxidation systems mainly rely on the action of superoxide dismutase (SOD) and catalase (CAT). Both SOD and CAT belong to the category of antioxidant enzymes. Barley and malt contain compounds that are easily oxidized as well as endogenous oxidoreductases for catalysis. During malt production and subsequent mashing, the endogenous oxidoreductases undergo a series of reactions that lead to the production of certain precursor substances for flavour aging (i.e. freshness reduction), as well as the loss of some of the endogenous antioxidants.

In the course of auto oxidation reactions and enzymatic reactions, superoxide free radicals $O_2^-$ are produced from oxygen. These effects are mainly manifested as peroxidation of lipids, degradation of polysaccharides, deactivation and inactivation of enzymes, etc. during beer brewing. To prevent the superoxide accumulation, aerobic organisms have developed enzymes that catalyse the elimination of these superoxide, and SOD is an important one of these enzymes. The following reaction will occur under SOD catalysis: $2O_2^- + 2H^+ \rightarrow H_2O_2 + O_2$.

Thus, it is meaningful to have sufficient amounts of SOD in barley and malt. SOD can have a positive protective effect during the ingredients storage and beer shelf-life flavour stabilization.

The above reaction will produce hydrogen peroxide. It is very important for an aerobic system to have enzymes capable of eliminating these hydrogen peroxides. CAT is an enzyme in malt that is capable of solving this problem, which is able to catalyse the elimination of the $H_2O_2$ produced. Due to consecutive actions of SOD and CAT, $H_2O$ and $O_2$ are ultimately produced. As a result, oxygen remains in its ground state, and will not change to oxygen free radicals that are very harmful to beer brewing.

As those skilled in the art will know, the antioxidation systems described above can ultimately be manifested as antioxidant activity of the malt, wort or even the final fermented beverage (such as beer and whisky) through the following indices as standards of antioxidant activity, e.g. DPPH free radical scavenging activity (DSA), ABTS free radical scavenging activity (ASA), reducing power (RP), metal ion chelating activity (MCA), total polyphenol content (TPC), superoxide dismutase activity, and catalase activity.

**Ingredients and instruments**

In addition to glass instruments commonly used in laboratories, other equipment and materials include: a stainless steel malt production tank, a constant temperature and humidity incubator (purchased from TOKYO RIKAKIKAI CO., LTD.), a hydrogen rich water electrolysis cup (purchased from Zhejiang Xinyankun Science & Technology Co., Ltd.) and a hydrogen rich water concentration detection kit (purchased from MIZ Co., Ltd., Japan).

Method for measuring concentration of hydrogen rich water: measurement is performed using a titration kit for dissolved hydrogen quantity in hydrogen rich water, enabling accurate measurement of the hydrogen content of the tested liquid, in units of 0.1 ppm. A reagent is dripped into the hydrogen rich water, drop by drop. If the water contains hydrogen, e.g. 0.5 ppm, then the colourless water will instantaneously turn blue after each addition of one(1) drop, and will then immediately turn back to colourless. Five (5) drops are added consecutively in this way, and each time, the water can turn from blue back to colourless. When the 6th drop is added, the blue water does not turn back to colourless. This indicates that the hydrogen content of the tested liquid is 0.5 ppm. In addition, it is also necessary to pay attention to the rate of attenuation of hydrogen concentration in the hydrogen rich water. The inventors have found that if the titration method is used to measure hydrogen concentration, after 30 minutes of standing, there has been no obvious change in the hydrogen concentration. After 50 minutes of standing, the hydrogen concentration has fallen to half the initial concentration. Thus, electrolysis may be performed again at intervals of 50 - 60 minutes.

The DPPH free radical scavenging activity (DSA) may be determined by the following method:
DPPH is a highly stable free radical. An ethanol solution thereof has the strongest absorption peak at 517 nm, i.e. purple. When antioxidants are present, the colour of the solution thereof will become paler because free radicals are scavenged.

Add a 2 mL sample and 2 mL of a 0.1 mmol. $L^{-1}$ DPPH ethanol solution to the same 10 mL brown centrifuge tube with, shake until uniform, and leave to stand for 30 min at room temperature in dark conditions. Using anhydrous ethanol as a blank control, measure the absorbance thereof at 517 nm, and calculate according to the following formula:

$$\text{DPPH free radical scavenging rate (\%)} = \frac{A_0 - (A_x - A_{x0})}{A_0};$$

where: $A_0$ is the absorbance of 2.0 mL anhydrous ethanol solution + 2.0 mL DPPH ethanol solution;

$A_x$ is the absorbance of 2.0 mL sample + 2.0 mL DPPH ethanol solution;
$A_{x0}$ is the absorbance of 2.0 mL sample + 2.0 mL anhydrous ethanol solution.

A standard curve is obtained with water-soluble vitamin E as a standard product. The DSA of the malt sample is expressed as $\mu$mol Trolox value·$g^{-1}$ ($\mu$mol TE·$g^{-1}$).

ABTS free radical scavenging activity (ASA) may be determined by the following method:
ABTS can be oxidized by reagents such as $MnO_2$ and $H_2O_2$, producing stable blue-green free radicals, with a strong absorption peak at 734 nm. Antioxidants will react with the abovementioned free radicals, causing the system colour to become paler.

Dissolve ABTS in water to make up a solution of concentration 14 mmol·$L^{-1}$, then mix with an equal volume of a 4.9 mmol·$L^{-1}$ potassium persulfate solution, and leave to stand for 12 to 14 h at room temperature in dark conditions. This solution is an ABTS free radical cationic stock solution. Dilute a suitable amount of the stock solution with pure water until the absorbance at 734 nm is 0.7 ($\pm$ 0.02). Mix 2.9 mL of the diluted liquid with 0.1 mL of a sample liquid, and after mixing evenly, react for 6 min at room temperature in dark conditions, and measure the absorbance thereof at 734 nm.

Calculate the scavenging rate according to the following formula:
ABTS free radical scavenging rate (%) = $(A_0 - A_x)/A_0$. where:

$A_x$ is 2.9 mL of ABTS diluted liquid + 0.025 mL of sample liquid + 0.075 mL of water;
$A_0$ is 2.9 mL of ABTS diluted liquid + 0.1 mL of water.

A standard curve is obtained, with water-soluble vitamin E as a standard product. The ASA of the malt is expressed as $\mu$mol Trolox value·$g^{-1}$ ($\mu$mol TE·$g^{-1}$).

The reducing power (RP) may be determined by the following method:

Reducing substances in the wort can reduce $Fe^{3+}$ to $Fe^{2+}$. The determination of reducing power uses the amount of Prussian blue $Fe_4(Fe(CN)_6)$ produced as an index. It has a maximum absorption peak at 700 nm. A greater absorbance value indicates stronger reducing power. Wort with stronger reducing power also has stronger antioxidizing power. The RP of malt is expressed as $\mu$mol ascorbic acid value·$g^{-1}$ ($\mu$mol AAE·$g^{-1}$).

The metal ion chelating activity (MCA) may be determined by the following method:

Some antioxidant components have a significant chelating action on metal ions. After adding ferrozine reagent, metal ions that have not been completely chelated will react with it, producing a red colour rendering substance, with the strongest absorption peak at 562 nm. The MCA of malt is expressed as $\mu$mol EDTA value ·$g^{-1}$ ($\mu$mol EDTAE·$g^{-1}$).

The total polyphenol content (TPC) may be determined by the following method:

Polyphenol compounds undergo an oxidation colouring reaction with a Folin-Ciocalteu reagent in basic conditions, producing a blue product. The darkness of the colour of the blue product is directly proportional to the total polyphenol content, and can be quantified by measuring the absorbance at 760 nm. The total polyphenol content of a sample can be calculated by comparison with a standard curve drawn for a standard product. The TPC of a malt sample is expressed as mg GAE·$g^{-1}$.

Superoxide dismutase (SOD) activity may be determined by the following method:

Using the NBT light reduction method for determination, the level of enzyme activity is determined based on SOD inhibition of the reduction of nitro blue tetrazolium (NBT) under light. In the presence of oxidizing substances, riboflavin can be reduced under illuminated conditions. The reduced riboflavin is re-oxidized extremely easily under aerobic conditions to produce $O_2^-$. After the addition of NBT, $O_2^-$ can then reduce NBT to blue methylhydrazone under illuminated conditions, wherein the latter has maximum light absorption at 560 nm.

When SOD is added, the SOD can inhibit the light reduction reaction of NBT by scavenging $O_2^-$, such that the rate of blue methylhydrazone production decreases. Thus, after the light reduction reaction, the darker the blue colour of the reaction solution, the lower the enzyme activity, and conversely, the higher the enzyme activity. The relative percentage of inhibition of NBT light reduction is positively correlated to enzyme activity within a certain range, and on this basis, the level of enzyme activity can be calculated. Often, the amount of enzyme needed for 50% inhibition of the NBT light reduction reaction is taken to be one enzyme activity unit (U), and enzyme activity is expressed as U/g of absolutely dry malt.

Catalase (CAT) activity may be determined by the following method:

The reduction in the amount of $H_2O_2$ in the reaction solution is determined, to determine the CAT activity. A 3 mL reaction system comprises 1 mL of 0.3% $H_2O_2$ and 1.95 mL of $H_2O$. 0.05 mL of enzyme liquid is finally added to start the reaction, and the rate of decrease of $A_{240}$ is determined. At 25°C, a 0.01 reduction in $A_{240}$ per minute is defined as one(1) enzyme activity unit (U), and enzyme activity is expressed as U/g of absolutely dry malt.

**Example A1: Yangnongpi No. 7 malt production experiment**

(1) Plump and intact Yangnongpi No. 7 barley is selected.
(2) Washing: 200 g of barley is weighed out, and surface impurities are washed off.
(3) First steeping: hydrogen rich water with a dissolved hydrogen concentration of 0.6 ppm is added to a steeping container to fully submerge the barley. The steeping container is placed in a constant temperature and humidity box, at a temperature of 15°C and a relative humidity of 90%. The duration of the first steeping is 4 hours, and the hydrogen rich water is replaced once every 30 minutes, to ensure the hydrogen rich water concentration. The steeping container here may be a steeping tank, which may be a commonly known steeping tank, preferably a stainless steel steeping tank. The shape and dimensions of the steeping container may be suitably adjusted according to common technical knowledge of those skilled in the art.
(4) First air rest: the duration of the first air rest of the barley exposed to air is 12 hours.
(5) Second steeping: The same steps as in the first steeping are repeated. The concentration of the hydrogen rich water is 0.6 ppm. The duration of the second steeping is 5 hours. The hydrogen rich water is replaced once every 30 minutes.
(6) Second air rest: the duration of the second air rest of the barley exposed to air is 12 hours.
(7) Germination: The barley germination stage begins after the second air rest ends. Moreover, start counting the barley germination time. During germination, a fixed amount of green malt is collected each day and kept for testing.

In the germination stage, hydrogen rich water with a dissolved hydrogen concentration of 0.6 ppm is used for water replenishment, so as to keep the steeping extent at about 45%. Water is replenished every 24 hours in the germination stage. For example, water may be replenished at 24th hours, 48th hours and 72nd hours. The germination stage are setup as follows: from the beginning of germination until the 24th hour, the germination temperature is set at 14°C; from the 24th to the 72nd hour, the germination temperature is set at 15°C; from the 72nd to the 96th hour, the germination temperature is set at 16°C; and from the 96th to the 110th hour, the germination temperature is set at 18°C.

Germination ends at the 110th hour (4 days + 14 hours), and green malt is obtained.

(8) The abovementioned green malt is dried. The drying stage is set at 45 - 65°C for 16 hours, at 75 - 80°C for 2 hours, and roasting for 3 hours at 83°C.

(9) Root removal: root buds and leaf buds are removed from the malt when roasting ends, and weighing is performed. At this point, the preparation of malt is completed.

**Example A2:** the same steps as in Example A1 are used. The difference is that the first steeping, the second steeping and the germination stage all use hydrogen rich water with a dissolved hydrogen concentration of 1.2 ppm.

**Example A3:** the same steps as in Example A1 are used. The difference is that hydrogen rich water with a dissolved hydrogen concentration of 0.6 ppm is used only in the first steeping, and piped water is used in the second steeping and the germination stage.

**Example A4:** the same steps as in Example A1 are used. The difference is that hydrogen rich water with a dissolved hydrogen concentration of 0.6 ppm is used only in the second steeping, and piped water is used in the first steeping and the germination stage.

**Example A5:** the same steps as in Example A1 are used. The difference is that hydrogen rich water with a dissolved hydrogen concentration of 0.6 ppm is used only in the germination stage, and piped water is used in the first steeping and the second steeping.

**Example A6:** the same steps as in Example A1 are used. The difference is that hydrogen rich water with a dissolved hydrogen concentration of 0.3 ppm is used in the first steeping and the germination stage, and piped water is used in the second steeping.

**Comparative Example A1:** the same steps as in Example A1 are used. The difference is that the first steeping, the second steeping and the germination stage all use piped water.

For each of the Examples and the Comparative Example above, two parallel groups may be set up.

The malts prepared in Examples A1 to A6 and Comparative Example A1 are separately made into conventional mashing wort, and the following quality indicators are determined, as shown in Table 1.

Overall, during malt production, the use of hydrogen rich water at the steeping and/or the germination stage can result in significant improvements in colour intensity, turbidity and $\alpha$-amino nitrogen of the malt simultaneously. Moreover, there was no negative impact on any quality index. Even when the dissolved hydrogen concentration is lower (Example A6), compared with using piped water to produce malt, the colour intensity was reduced by 8.1%, turbidity was reduced by 7.3%, and $\alpha$-amino nitrogen was increased by 2.8%.

The effect in terms of improving colour intensity, turbidity and $\alpha$-amino nitrogen was most significant when hydrogen rich water was used in the steeping stages and the germination stage. The biological effect of hydrogen rich water in the steeping stage was more obvious than in the germination stage. When hydrogen rich water only used in the germination stage, there was a slight improvement in colour intensity, turbidity and $\alpha$-amino nitrogen, but it was not significant. This can be seen from Examples A3 to A5. In addition, looking at Examples A5 and A6, even though hydrogen rich water of lower concentration (0.3 ppm) was used in the steeping stage, the effect in terms of improving colour intensity, turbidity and $\alpha$-amino nitrogen was more obvious than when hydrogen rich water of higher concentration (0.6 ppm) was used only in the germination stage.

The higher the concentration of hydrogen rich water, the more obvious the biological effect on colour intensity, turbidity and $\alpha$-amino nitrogen of malt. Compared with Example A1, the colour intensity in Example A2 is further reduced by 14.3%, turbidity in Example A2 is further reduced by 1.4%, and $\alpha$-amino nitrogen in Example A2 is further increased by 7.4%. Malt producers can weigh up the quality indicators against economy as required.

Table 1: Quality indicators for malt made in Examples A1 to A6 and Comparative Example A1

| Malt | Hydrogenrich water concentration in first steeping | Hydrogenrich water concentration in second steeping | Hydrogen rich water concentration in germination stage | Colour intensity (EBC) | Turbidity (EBC) | $\alpha$-Amino nitrogen (mg/100 g) |
|---|---|---|---|---|---|---|
| Example A1 | 0.6 ppm | 0.6 ppm | 0.6 ppm | 4.63 | 1.42 | 230.08 |
| Example A2 | 1.2 ppm | 1.2 ppm | 1.2 ppm | 3.97 | 1.40 | 247.18 |
| Example A3 | 0.6 ppm | 0 | 0 | 4.83 | 1.50 | 215.98 |
| Example A4 | 0 | 0.6 ppm | 0 | 5.125 | 1.78 | 224.43 |
| Example A5 | 0 | 0 | 0.6 ppm | 5.38 | 1.84 | 206.32 |

(continued)

| Malt | Hydrogenrich water concentration in first steeping | Hydrogenrich water concentration in second steeping | Hydrogen rich water concentration in germination stage | Colour intensity (EBC) | Turbidity (EBC) | α-Amino nitrogen (mg/100 g) |
|---|---|---|---|---|---|---|
| Example A6 | 0.3 ppm | 0 | 0.3 ppm | 5.13 | 1.78 | 21008 |
| Comparative Example A1 | 0 | 0 | 0 | 5.58 | 1.92 | 204.34 |

Thus, the present application can simultaneously improve multiple key quality indicators by using hydrogen rich water in malt production. The positive biological effects of hydrogen rich water are especially significant.

The reduction in malt colour intensity and turbidity conforms to the wishes of beer producers regarding light-coloured beers. The increased content of α-amino nitrogen in the malt brings greater economic benefit to malt producers. The present application also provides a stage of using hydrogen rich water and a suitable range of hydrogen rich water concentrations, constituting important guidance for malt producers.

**Example B1: Yangnongpi No. 7 malt production experiment**

(1) Plump and intact Yangnongpi No. 7 barley is selected.

(2) Washing: 200 g of barley is weighed out, and surface impurities are washed off.

(3) First steeping: hydrogen rich water with a dissolved hydrogen concentration of 0.6 ppm is added to a steeping container to fully submerge the barley. The steeping container is placed in a constant temperature and humidity box, at a temperature of 15°C and a relative humidity of 90%. The duration of the first steeping is 4 hours, and the hydrogen rich water is replaced once every 30 minutes, to ensure the hydrogen rich water concentration. The steeping container here may be a steeping tank, which may be a commonly known steeping tank, preferably a stainless steel steeping tank. The shape and dimensions of the steeping container may be suitably adjusted according to common technical knowledge of those skilled in the art.

(4) First air rest: the first air rest duration of barley exposed to air is 12 hours.

(5) Second steeping: the same steps as in the first steeping are repeated. The concentration of the hydrogen rich water is 0.6 ppm. The duration of the second steeping is 5 hours. The hydrogen rich water is replaced once every 30 minutes.

(6) Second air rest: the duration of the second air rest of barley exposed to air is 12 hours.

(7) Germination: The barley germination stage begins after the second air rest ends. Moreover, start counting the barley germination time. During germination, a fixed amount of green malt is collected each day and kept for testing.

In the germination stage, hydrogen rich water with a dissolved hydrogen concentration of 0.6 ppm is used for water replenishment, so as to keep the steeping extent at about 45%.

Water is replenished every 24 hours in the germination stage, for example, water may be replenished at 24th hours, 48th hours and 72nd hours. The germination stage is setup as follows: from the beginning of germination until the 24th hour, the germination temperature is set at 14°C; from the 24th to the 72nd hour, the germination temperature is set at 15°C; from the 72nd to the 96th hour, the germination temperature is set at 16°C; and from the 96th to the 110th hour, the germination temperature is set at 18°C.

Germination ends at the 110th hour (4 days + 14 hours), and green malt is obtained.

(8) The abovementioned green malt is dried. The drying stage set at 45 ~ 65°C for 16 hours, at 75 ~ 80°C for 2 hours, and roasting for 3 hours at 83°C.

(9) Root removal: root buds and leaf buds are removed from the malt when roasting ends, and weighing is performed. At this point, the preparation of malt is completed.

**Comparative Example B1:** the same steps as in Example B1 are used. The difference is that the first steeping, the second steeping and the germination stage all use piped water.

**Example B2:** the same steps as in Example B1 are used. The difference is that hydrogen rich water with a dissolved hydrogen concentration of 0.6 ppm is used only in the first steeping, and piped water is used in the second steeping and the germination stage.

**Example B3:** the same steps as in Example B1 are used. The difference is that hydrogen rich water with a dissolved hydrogen concentration of 0.6 ppm is used only in the germination stage, and piped water is used in the first steeping and the second steeping.

Two parallel groups are set up for each of the above.

Four antioxidant activity indices of the malts made in Example B1 and Comparative Example B1 above are separately determined. The results are shown in Table 2.

The DPPH free radical scavenging activity and the ABTS free radical scavenging activity are in units of $\mu$mol Te/g of malt. Reducing power is in units of $\mu$mol AAE/g of malt. And the metal chelating activity MCA is in units of $\mu$mol EDTA/g of malt. The same applies herein below.

It can be seen from Table 2 that in the malt made in Example B1, the DPPH free radical scavenging activity, the ABTS free radical scavenging activity, the reducing power RP and the metal chelating activity MCA are all obviously improved, respectively by 21.8%, 37.4%, 28.2% and 19.0%.

It can be hypothesized that hydrogen in the hydrogen rich water is involved as an exogenous hormone that influences malt manufacturing while promoting important endogenous antioxidant activity in malt.

Table 2: Antioxidant activity results for malt made in Example B1 and Comparative Example B1

| Group | DPPH free radical scavenging activity ($\mu$mol TE·g$^{-1}$) | ABTS free radical scavenging activity ($\mu$mol TE·g$^{-1}$) | Reducing power ($\mu$molAAE·g$^{-1}$) | Metal chelating activity ($\mu$mol EDTAE·g$^{-1}$) |
|---|---|---|---|---|
| Example B1 | 8.89 | 17.31 | 10.41 | 5.14 |
| Comparative Example B1 | 730 | 12.60 | 8.12 | 4.32 |

Malt producers and beer producers will consider the issue of the economic costs of using hydrogen rich water. The inventors have investigated the effects of hydrogen rich water use phase of the malt production process on key antioxidant activity indices.

As set in Examples B1 to B3, key antioxidant activity indices of a finished malt product are finally determined. The results are shown in Table 3. As can be seen, the use of hydrogen rich water in the steeping stages contributes most to improving the antioxidant activity of the malt.

Although using hydrogen rich water in the germination stage alone increases the antioxidant activity of the malt, the increase is quite small. The antioxidant activity of the malt produced is highest when hydrogen rich water is used both in the steeping and in the germination stages, largely due to the contribution of the steeping stages.

Table 3: Antioxidant activity of malts made in Examples B1 to B3 and Comparative Example B1

| Group | DPPH free radical scavenging activity ($\mu$mol TE·g-1) | ABTS free radical scavenging activity ($\mu$mol TE·g-1) | Reducing power ($\mu$mol AAE·g-1) | Metal chelating activity ($\mu$mol EDTAE·g-1) |
|---|---|---|---|---|
| Example B1 | 8.89 | 17.31 | 10.41 | 5.14 |
| Example B2 | 8.41 | 15.77 | 9.58 | 4.79 |
| Example B3 | 7.72 | 13.11 | 8.23 | 4.42 |
| Comparative Example B1 | 730 | 12.60 | 8.12 | 4.32 |

Regarding two antioxidant enzymes of interest to malt producers and beer producers, the inventors separately determined results for SOD and CAT in the malts made in Examples B2 and B3, as shown in Table 4.

In the course of malt production, the use of hydrogen rich water in the steeping and/or germination stages increases SOD and CAT activity to varying degrees. Despite the fact that, the increase in antioxidant enzyme activity with hydrogen rich water only at the germination stage was not as significant as with hydrogen rich water at the steeping stage. Enhancement of SOD and CAT activity will directly promote an increase in DPPH free radical scavenging activity, ABTS free radical scavenging activity, reducing power and metal ion chelating activity. This is also in conformity with the trend shown in the results in Table 3.

Table 4: Antioxidant enzyme activity of malts made in Examples B2 and B3

| Group | SOD(U/g) | CAT(U/g) |
|---|---|---|
| Example B2 | 10.41 | 75.32 |

(continued)

| Group | SOD(U/g) | CAT(U/g) |
|---|---|---|
| Example B3 | 8.19 | 67.26 |
| Comparative Example B1 | 7.41 | 64.31 |

Further, to verify the effects of different concentrations of hydrogen rich water on non-enzymatic antioxidation systems and enzymatic antioxidation systems, the inventors set up the following Example B4.

**Example B4:** the same steps as in Example B1 are used. The difference is that the first steeping, the second steeping and the germination stage all use hydrogen rich water with a dissolved hydrogen concentration of 1.2 ppm.

Two parallel groups are set up.

The total polyphenol content TPC in the malt made in Example B4 is determined. The result is shown in Table 5.

Ultimately, the total polyphenol content of the malt made in Example B4 was increased by 52.7% compared with the malt made in Comparative Example B1. The dissolved hydrogen in the hydrogen rich water, as an exogenous hormone, promoted an increase in the content of phenols during germination. Phenols are of great concern to beer producers, because phenols are closely linked to beer stability and freshness.

In addition, the SOD and CAT activities of the malt made in Example B4 are also higher than in Examples B2 and B3. This shows that within a suitable range, the higher the concentration of hydrogen rich water, the more significant the biological effect thereof on antioxidant enzymes.

Table 5: Antioxidant enzyme activity and total polyphenol content of malt made in Example B4

| Group | SOD(U/g) | CAT(U/g) | Total polyphenol content (mg GAE·g-1) |
|---|---|---|---|
| Example B4 | 11.35 | 78.52 | 3.71 |
| Comparative Example B1 | 7.41 | 64.31 | 2.43 |

The use of hydrogen rich water during malt production to provide dissolved hydrogen can significantly increase the total polyphenol content and key antioxidant enzyme activities of the malt, ultimately manifested as an increase in the DPPH free radical scavenging activity, ABTS free radical scavenging activity, reducing power and metal ion chelating activity of the malt, the wort or even the final fermented beverage (such as beer and whisky). An increase in the endogenous antioxidant activity, as desired by malt producers and the brewing industry, is thus achieved. Moreover, no additional additives are introduced during malt production, which is safe and reliable.

Described in the description are merely preferred specific embodiments of the present application, and the above embodiments are merely used to explain the technical solution of the present application without limiting the present application. All technical solutions obtainable by those skilled in the art by logical analysis, reasoning or limited experiment according to the concept of the present application should be within the scope of the present application.

**Claims**

1. Method for improving antioxidant activity of malt, **characterized in that** grains are subjected to at least one steeping step, in which the grains are immersed in hydrogen water with a dissolved hydrogen concentration of 0.3 to 1.6 ppm, preferably 0.3 to 1.2 ppm, and more preferably 0.6 to 1.2 ppm.

2. Method according to Claim 1, **characterized in that** after the steeping step, the grains begin to germinate, and hydrogen water with a dissolved hydrogen concentration of 0.3 to 1.6 ppm, preferably 0.3 to 1.2 ppm, and more preferably 0.6 to 1.2 ppm, is used at least once to keep a surface of the grains moist.

3. Method according to Claim 1 or 2, **characterized in that** the steeping is performed twice, and the grains are immersed in hydrogen water in both the first steeping and the second steeping.

4. Method according to Claim 1 or 2 , **characterized in that** an indicator of antioxidant activity of the malt comprises DPPH free radical scavenging activity, ABTS free radical scavenging activity, reducing power and/or metal ion chelating activity.

5. Method according to Claim 1 or 2, **characterized in that** an indicator of antioxidant activity of the malt comprises total polyphenol content.

6. Method according to Claim 1 or 2, **characterized in that** an indicator of antioxidant activity of the malt comprises superoxide dismutase activity and catalase activity.

7. Malt production method, **characterized in that** grains are subjected to at least one steeping step, in which the grains are immersed in hydrogen water with a dissolved hydrogen concentration of 0.3 to 1.6 ppm, preferably 0.3 to 1.2 ppm, and more preferably 0.6 to 1.2 ppm.

8. Malt production method according to Claim 7, **characterized in that** after the steeping step, the grains begin to germinate, and hydrogen water with a dissolved hydrogen concentration of 0.3 to 1.6 ppm, preferably 0.3 to 1.2 ppm, and more preferably 0.6 to 1.2 ppm, is used at least once to keep a surface of the grains moist.

9. Malt production method according to Claim 7 or 8, **characterized in that** the steeping is performed twice, and the grains are immersed in hydrogen water with a dissolved hydrogen concentration of 0.3 to 1.6 ppm in both the first steeping and the second steeping.

10. Use of the malt production method according to any one of Claims 7 to 9 for reducing malt colour intensity, reducing malt turbidity and/or increasing a content of $\alpha$-amino nitrogen in malt.

11. Malt obtained by the malt production method according to any one of Claims 7 to 9.

12. Use of the malt according to Claim 11 for preparing a fermented beverage or a fermented foodstuff.

13. Use according to Claim 12, **characterized in that** the fermented beverage comprises beer, a beer-flavoured beverage or whisky.

14. Method for increasing antioxidant activity of plant raw material, the method comprising a step of subjecting the plant raw material to steeping at least once and/or germination at least once in hydrogen water with a dissolved hydrogen concentration of 0.3ppm to 1.6 ppm, to produce a fermented foodstuff or fermented beverage.

15. Method according to Claim 14, **characterized in that** the plant raw material comprises but is not limited to leaves, seeds, roots, stalks, flowers or fruits.

Europäisches
Patentamt

European
Patent Office

Office européen
des brevets

# EUROPEAN SEARCH REPORT

**Application Number**

EP 24 21 8351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 535 118 A (UNIV SHANGHAI JIAOTONG) 5 January 2018 (2018-01-05) * claims; examples * ----- | 1-15 | INV. A23L7/20 C12C1/02 C12C1/027 |
| X | CN 108 308 007 A (BEIJING FANGYUAN PINGAN BIOTECHNOLOGY CO LTD) 24 July 2018 (2018-07-24) * paragraph [0004]; claims * ----- | 14,15 | |
| X | CN 111 758 540 A (UNIV SHANGHAI JIAOTONG) 13 October 2020 (2020-10-13) * claims; examples * ----- | 14,15 | |

**TECHNICAL FIELDS SEARCHED (IPC)**

A23L
C12C

The present search report has been drawn up for all claims

| Place of search | Date of completion of the search | Examiner |
|---|---|---|
| Munich | 10 April 2025 | Smeets, Dieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 8351

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | Publication date | Patent family member(s) | Publication date |
|---|---|---|---|
| CN 107535118 A | 05-01-2018 | NONE | |
| CN 108308007 A | 24-07-2018 | NONE | |
| CN 111758540 A | 13-10-2020 | NONE | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102899210 B

- CN 102657221 B

**Non-patent literature cited in the description**

- **RONG ZHIMING**. Study on the use of exogenous substances to improve malt quality [D. Dalian Polytechnic University, 2016
- **ELIZABETH L. INNS** ; **LESLEY A. BUGGEY** ; **CHRISTOPHER BOOER et al.** Effect of Modification of the Kilning Regimen on Levels of Free Ferulic Acid and Antioxidant Activity in Malt[J. American Chemical Society, 2011, vol. 59, 9335-9343

- **MONDHER KHDHIRI** ; **JUNE 2017**. The Tale of a Neglected Energy Source: Elevated Hydrogen Exposure Affects both Microbial Diversity and Function in Soil. *Applied and Environmental Microbiology*, vol. 83